# FASCICULE DE BREVET EUROPEEN

(11) **EP 1 129 968 B1**
(45) Date de publication et mention de la délivrance du brevet: **10.11.2004**
(21) Numéro de dépôt: 01400456.8
(22) Date de dépôt: 21.02.2001
(51) Int. Cl.: B65G 69/18, B65D 90/62

(54) **Dispositif réglable de transfert par gravité de pulvérulent ou de granulés**
Verstellbare Vorrichtung zur Förderung mittels Schwerkraft von pulverförmigem oder körnigem Material
Adjustable device for transferring by gravity pulverulent or granular material

(30) Priorité: 02.03.2000 FR 0002698
(43) Date de publication de la demande: 05.09.2001
(73) Titulaire: BSIPM-BSI Process Manufacturing, 75014 Paris (FR)
(72) Inventeur: Robert, Alain, 37520 La Riche (FR)
(74) Mandataire: Debay, Yves

(56) Documents cités:
- GB-A- 472 503
- GB-A- 1 505 878
- GB-A- 2 333 287
- US-A- 4 162 795
- US-A- 5 775 544

## Description

L'invention concerne un dispositif réglable de transfert par gravité de pulvérulent ou de granulés.

Il est connu dans l'art antérieur des dispositifs de transfert par gravité de pulvérulent ou de granulés, mais ces dispositifs présentent le désagrément de nécessiter l'utilisation d'équipements très spécifiques ou de faire appel à une technologie utilisant des organes mécaniques mobiles dont les éléments de commande graissés peuvent être en contact avec le produit.

Un premier but de l'invention est de proposer un dispositif de transfert par gravité de granulés ou de pulvérulent qui ne nécessite pas d'équipement très spécifique et qui permette une maîtrise aisée de l'écoulement gravitaire de pulvérulent ou de granulés.

Un autre but de l'invention est de proposer un dispositif de transfert en gravité de pulvérulent dont la technologie mécanisée constituée par les organes de commande et d'actionnement ne soit pas en contact avec le produit et dont la nettoyabilité soit aisée.

Un autre but de l'invention est de proposer un dispositif de transfert par gravité de pulvérulent ou de granulés qui s'adapte à tout type de contenant supérieur et inférieur.

Un autre but de l'invention est de proposer un dispositif de transfert en gravité de pulvérulent ou de granulé dont l'automatisation soit aisée et qui présente un encombrement réduit.

Ces buts sont atteints par le dispositif réglable de transfert par gravité de granulés ou de pulvérulent selon la revendication 1.

Des développements supplémentaires de l'invention sont décrits dans les revendications 2 à 29.

Le principe d'un dispositif de transfert par gravité de pulvérulent ou de granulés est de pouvoir doser finement un écoulement gravitaire de pulvérulent ou de granulés. Les granulés doivent pouvoir être stockés en quantité importante dans un contenant supérieur et ce afin de pouvoir les charger en une seule manoeuvre par exemple par sacs entiers ou par camions. Les granulés doivent ensuite pouvoir être dosés finement avec la possibilité d'interrompre à volonté l'écoulement ou de permettre leur écoulement dans un contenant inférieur. Ils tombent par gravité suivant le débit réglé dans ce contenant inférieur, où ils sont ensuite traités comme il se doit. Ils peuvent, par exemple, être ensachés régulièrement en petites quantités ou, par exemple, être disposés régulièrement le long d'un chariot roulant pour subir un process industriel.

Le dispositif selon l'invention s'adapte à tout type de contenant supérieur présentant une ouverture basse de dimension donnée pour l'écoulement des granulés, et tout contenant inférieur présentant une ouverture haute de dimension donnée pour l'écoulement des granulés. Le principe du dispositif est d'abord de canaliser l'amenée des granulés entre le contenant supérieur et le contenant inférieur. Le principe du dispositif est ensuite de pouvoir réguler le débit des granulés dans le contenant inférieur.

Dans un premier temps, le dispositif doit être fixé et disposé entre le contenant supérieur et le contenant inférieur. Ce dispositif comprend un plateau de fixation horizontal. Ce plateau de fixation horizontal est disposé de façon fixe juste au-dessus, à ras de l'ouverture du contenant inférieur. Ce plateau de fixation est muni d'un passage d'un diamètre inférieur à celui de l'ouverture du contenant inférieur et disposé au-dessus de l'ouverture du contenant inférieur. Ce passage peut être bouché par un obturateur. Cet obturateur est disposé dans l'axe du contenant inférieur et peut être actionné par un mécanisme décrit ci-après, de façon à libérer le passage ou de façon à obturer le passage.

Entre le contenant supérieur et le contenant inférieur est disposé un élément. Sur sa partie haute, la partie de plus grand diamètre de l'élément entoure le contenant supérieur. Dans un premier mode de réalisation, sur sa partie basse, la partie de plus petit diamètre de l'élément est entourée par une cloison cylindrique solidaire du passage du plateau de fixation. Dans un second mode de réalisation, la partie basse de l'élément est flexible et entoure le passage du plateau de fixation. Sur le plateau de fixation sont disposés des moyens de mise en translation verticale de l'élément. Ces moyens peuvent, par exemple, être un vérin, et sont disposés à l'extérieur de l'élément. A l'intérieur de l'élément se trouve disposé un corps d'obturateur et une tige d'obturateur. La tige d'obturateur est solidarisée à l'obturateur selon l'une de ses extrémités. Selon son autre extrémité, la tige d'obturateur est solidarisée à une structure métallique qui est elle-même solidarisée aux parois internes de l'élément.

Le principe d'utilisation du dispositif est simple. En position fermée, l'obturateur bouche le passage disposé dans le plateau de fixation. En position ouverte, les moyens de mise en translation verticale de l'élément ont entraîné l'élément et l'obturateur en translation verticale vers le bas en direction de l'ouverture du contenant inférieur. Ceci libère l'ouverture du passage dans le plateau inférieur et permet donc l'écoulement des granulés. L'invention selon un second mode de réalisation permet de maximiser le débit de pulvérulent ou de granulés en position ouverte. En position à ouverture réduite, les moyens de mise en translation verticale remontent légèrement l'élément et l'obturateur dans une translation verticale ascendante. Ceci a l'effet de réduire l'espace entre l'obturateur et le passage dans le plateau de fixation, de façon à libérer un fin espace propre à un débit faible de granulés.

D'autres particularités et avantages de la présente invention apparaîtront plus clairement à la lecture de la description ci-après faite en référence aux dessins annexés dans lesquels :
la figure 1 représente une vue en coupe du dispositif de transfert par gravité de pulvérulent ou de granulés en position fermée selon un premier mode de réalisation.
La figure 2 représente une vue en coupe du dispositif de transfert par gravité de pulvérulent ou de granulés en position ouverte selon un premier mode de réalisation.
La figure 3 représente une vue en coupe du dispositif de transfert par gravité de pulvérulent ou de granulés en position à ouverture réduite selon un premier mode de réalisation.
La figure 4 représente une vue de dessus schématique des moyens de mise en translation et de soutien de l'élément, c'est à dire des systèmes liés aux vérins et aux ressorts.
La figure 5 représente une vue en coupe du dispositif de transfert par gravité de pulvérulent ou de granulés en position fermée selon un deuxième mode de réalisation.
La figure 6 représente une vue en coupe du dispositif de transfert par gravité de pulvérulent ou de granulés en position ouverte selon un deuxième mode de réalisation.
La figure 7 représente une vue en coupe du dispositif de transfert par gravité de pulvérulent ou de granulés en position à ouverture réduite selon un deuxième mode de réalisation.
Les figures 8A à 8D représentent une vue en coupe du dispositif de transfert par gravité de pulvérulent ou de granulés selon un troisième mode de réalisation et dans diverses positions d'utilisation.

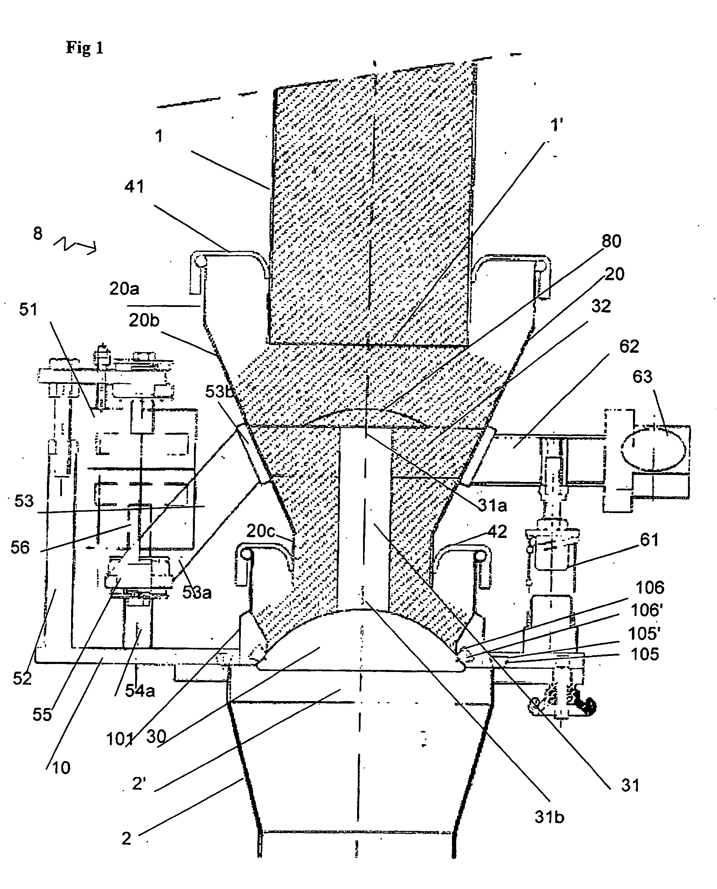

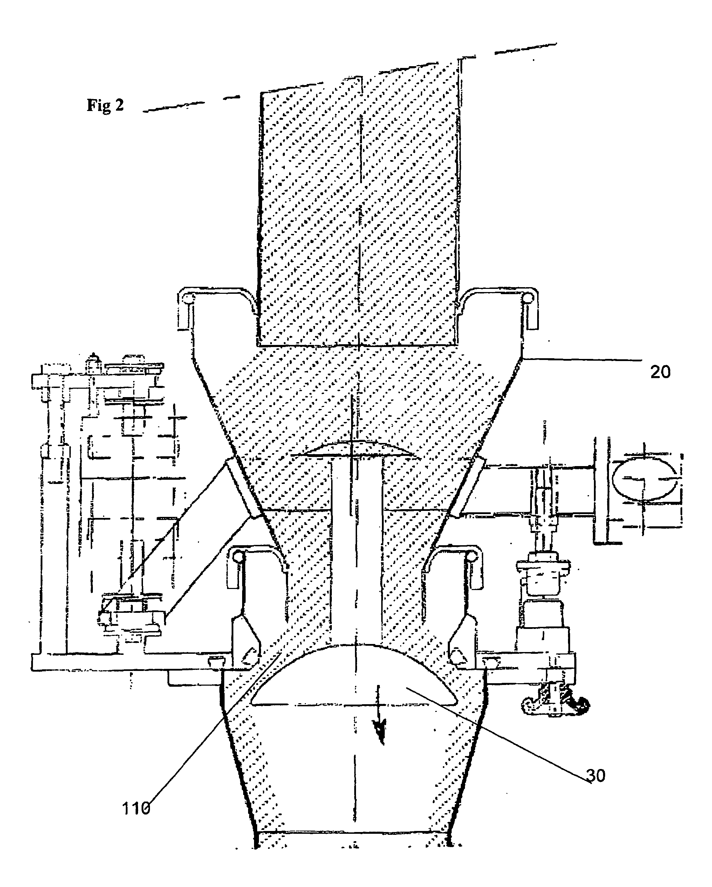

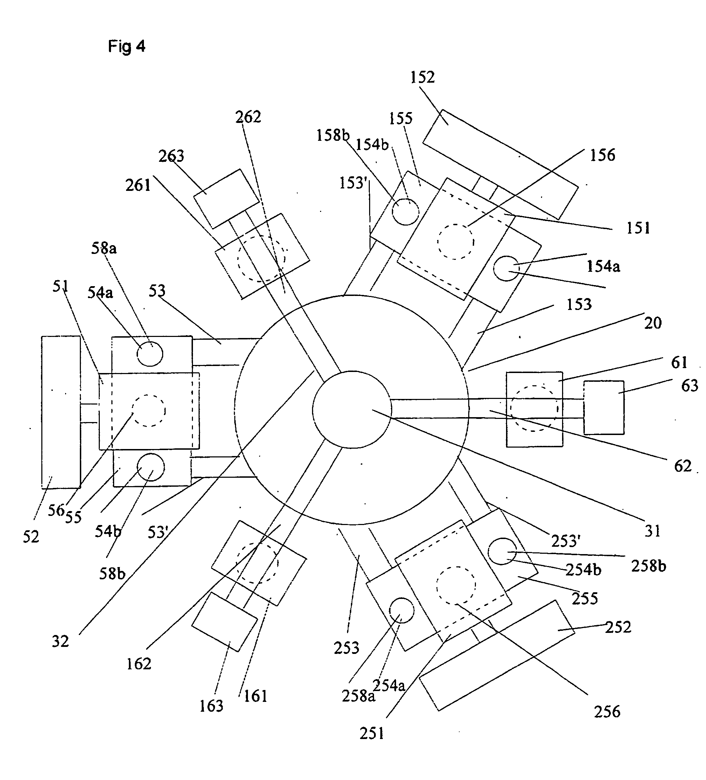

La figure 1 représente une vue en coupe du dispositif (8) de transfert par gravité de pulvérulent ou de granulés en position fermée selon un premier mode de réalisation. Ce dispositif s'intercale entre le contenant supérieur (1) de forme générale cylindrique. Ce contenant supérieur est muni d'une ouverture de vidange (1'). Le contenant inférieur (2) de forme générale à symétrie axiale verticale est muni d'une ouverture de remplissage (2'). Le plateau de fixation (10) est solidarisé sur le contenant inférieur (2). Il est par exemple solidarisé de façon démontable à une collerette (101) elle-même solidaire de l'ouverture (2') du contenant inférieur (2). Le plateau (10) est disposé à ras de l'ouverture du contenant inférieur (2). Le plateau (10) est muni d'un passage (110, fig2) de diamètre inférieur d'au moins un cinquième au diamètre de l'ouverture (2') du contenant inférieur. Pour des raisons d'étanchéité vis-à-vis des granulés, le plateau (10) comporte une nervure circulaire (105) dans laquelle est disposé un joint torique (105') situé en périphérie extérieure de la paroi du contenant inférieur (2). Afin de canaliser les granulés, le plateau (10) comporte une pièce à symétrie axiale verticale de forme générale cylindrique (101) qui délimite à l'extérieur le passage (110). La pièce (101) est elle-même pourvue d'une nervure annulaire (106) dans laquelle est disposé un joint torique d'étanchéité (106'). La nervure est disposée légèrement à l'intérieur du passage (110) sur la surface latérale de la pièce (101) en vis-à-vis de la surface de contact de l'obturateur (30) de façon à faire contact entre le joint torique (106') et l'obturateur (30). Une tige d'obturateur (31) verticale, dont l'axe de symétrie est confondu avec l'axe de symétrie de l'élément (20), est solidarisée sur son extrémité basse (31b) à l'obturateur (30). Sur son extrémité haute (31a), la tige d'obturateur est solidarisée à une structure métallique (32, fig 4) par exemple en étoile. La structure métallique (32) est elle-même solidarisée aux parois internes de l'élément (20) et rend aussi solidaire l'obturateur (30) des déplacements de l'élément (20). L'obturateur (30) présente en direction du passage une forme générale de calotte sphérique ou tronconique pour favoriser l'écoulement. Le diamètre maximum de la calotte sphérique est très légèrement supérieur à celui du passage (110) dans le plateau (10). La structure générale est apte à supporter le poids des granulés et pulvérulents contenus dans l'élément. Un dôme (80) en forme de calotte sphérique ou de cône est disposé au centre et sur le dessus de la structure métallique (32) et recouvre une partie de la structure métallique (32). La fonction de ce dôme est de prévenir toute accumulation de pulvérulents ou de granulés qui puissent s'agglutiner sur la structure métallique (32) et ce afin d'éviter une zone de rétention. La tranche des profilés métallique (32) orientés vers le haut présente également un biais ou une forme évitant la retenue de matière en équilibre sur la tranche.

Sur le plateau (10) sont disposés trois vérins par exemple pneumatiques ou électriques ou hydrauliques identiques à déplacement vertical (51, 151, 251) disposés sur un cercle dont le centre passe par l'axe de symétrie de l'élément (20) et disposés chacun à 120° l'un de l'autre. Cette disposition est visible sur la figure 4. Sur la figure 1 n'apparaît que le vérin (51). Le vérin (51) est solidarisé à un bâti (52) qui est lui-même solidarisé au plateau (10). Le bâti (52) est réglable en hauteur et permet d'ajuster la hauteur du vérin (51) par rapport au plateau (10). La tige (56) du vérin (51) est disposée verticalement. Une plaque support (55) est rendue solidaire des déplacements de la tige (56) du vérin. Les premières extrémités (53a, 53'a (fig 4)) des bras (53, 53' (fig4)) sont solidarisées à cette plaque support (55). La plaque support (55) présente deux orifices (58a, 58b) à symétrie axiale verticale. Deux tiges de guidage (54a, 54b) à symétrie axiale verticale et solidarisées au plateau (10) traversent les orifices (58a,58b). Sur la figure 1 n'apparaît que la tige de guidage (54a) et le bras (53) dont la seconde extrémité (53b) est solidaire de l'élément (20). La fonction de ces tiges de guidage est de consolider l'ensemble du système lié au vérin du fait des sollicitations mécaniques et de façon à ce que le déplacement des tiges du vérin et de l'élément soient bien verticaux. Les bras (53, 53') forment un angle identique d'environ 45° avec la verticale. Selon leurs autres extrémités (53b, 53'b), les bras (53, 53') sont solidarisés à un élément (20). Chaque vérin est commandé par un fluide hydraulique et l'utilisateur peut donc contrôler, par ce moyen, la position relative des extrémités (53b, 53'b) des bras (53b, 53'b) par rapport au plateau et ainsi la position de l'élément (20). Chaque vérin (51, 151, 251) entraîne en translation verticale les bras respectifs (53, 53',153, 153', 253, 253') et entraîne donc de fait en translation verticale l'élément (20).

L'élément (20) présente une symétrie axiale verticale. Sur sa partie basse, il présente une surface cylindrique (20c), sur sa partie médiane, il présente une surface tronconique (20b), sur sa partie haute, il présente une surface cylindrique (20a). Le diamètre du cylindre correspondant à la surface (20c) est inférieur au diamètre de l'ouverture de vidange (2') du contenant inférieur (2). Le diamètre du cylindre correspondant à la surface (20a) est supérieur au diamètre de l'ouverture de remplissage (1') du contenant supérieur (1).

Sur la partie haute (20a) de l'élément est fixée une collerette (41) de diamètre adaptable au diamètre de la paroi extérieure (1a) du contenant (1). La fonction de cette rondelle est de procurer une étanchéité, de façon à ce que les granulés restent confinés dans l'élément (20) et ne puissent pas s'échapper sur sa partie supérieure.

Sur la pièce (102) de la partie haute du plateau (10) est fixée une collerette (42) de diamètre adaptable au diamètre de la paroi extérieure inférieure (20c) de l'élément (20). La fonction de cette rondelle est de procurer une étanchéité de façon à ce que les granulés ne puissent pas s'échapper en hauteur, au-dessus de la paroi (110) du plateau (10).

Sur le plateau (10) sont également disposés à 120° les uns des autres, trois ressorts identiques à déplacement linéaire vertical (61, 161, 261) disposés sur un cercle dont le centre passe par l'axe de symétrie de l'élément (20). Cette disposition est visible sur la figure schématique 4. Sur la figure 1 apparaît le ressort (61). L'axe du ressort (61) se situe dans le plan de l'axe du vérin (51) et de l'autre côté de l'axe de symétrie vertical de l'élément (20). Un bras (62) horizontal lié au ressort (61) vient également soutenir l'élément (20). Ce bras (62) est soutenu en son milieu par le ressort (61). Ce ressort (61) à axe vertical est solidarisé au plateau (10). Le ressort (61) est muni de moyens de réglage de sa force de rappel.

Une fonction des couples bras-ressort (62, 61) (162, 161) (262, 261) est de soutenir l'élément (20) et d'assurer l'arrêt de l'écoulement lorsque les vérins (51, 151, 251) ne sont pas alimentés et ne sollicitent pas l'élément vers le bas.

Sur le bras (62) est monté un dispositif de mise en vibration (63). La fonction de ce dispositif (63) est de mettre en vibration l'élément (20) afin de décoller les pulvérulents ou granulés qui pourraient se fixer à la paroi ou sur la structure (32).

Comme représenté figure 4, à l'intérieur de l'élément (20), en vis-à-vis par exemple des bras (62, 162, 262) est disposée et solidarisée aux parois internes de l'élément (20) une structure métallique (32). La structure métallique (32) présente une forme d'étoile à trois branches dont le centre passe par l'axe de symétrie de l'élément (20). La structure métallique (32) est par exemple solidarisée par soudure ou par tout autre moyen à l'extrémité haute (31 a) de la tige d'obturateur (31).

Sur la figure 4 apparaît, vue de dessus, une figure schématique des moyens de mise en translation et de soutien de l'élément, c'est à dire des systèmes liés aux vérins et aux ressorts. Les couples vérins-ressorts (51,61 (151,161) (251,261) sont disposés chacun dans trois plans qui contiennent chacun l'axe de symétrie de l'élément, l'axe du ressort et l'axe de la tige du vérin, l'axe du vérin et l'axe du ressort étant disposés de part et d'autre de l'axe vertical de symétrie de l'élément. Ces trois plans forment deux à deux des angles de 120°.

Les structures liées aux vérins (51, 52, 53, 53', 55, 54a, 54b, 56, 58a, 58b) et (151, 152, 153, 153', 155, 154a, 154b, 156, 158a, 158b) et (251, 252, 253, 253', 255, 254a, 254b, 256, 258a, 258b) sont identiques dans leur forme et dans leur réalisation.

Les structures liées aux ressorts (61, 62, 63) et (161, 162, 163) et (261, 262, 263) sont identiques dans leur forme et dans leur réalisation.

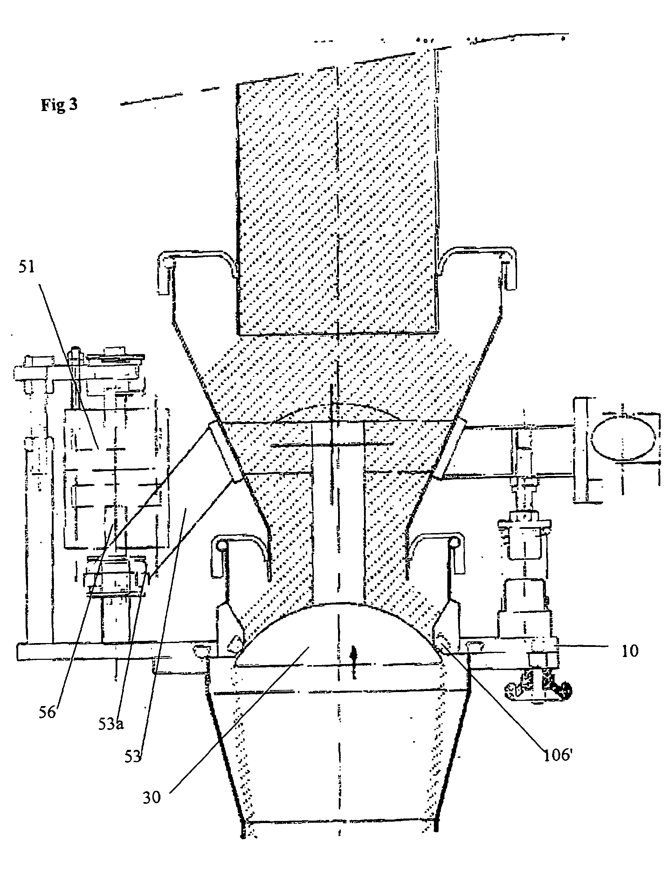

En position fermée, les vérins ne sont pas alimentées et l'élément est sollicité vers le haut par les ressorts (61, 161, 261) et comme représenté en figure 1, l'obturateur (30) vient s'appuyer sur le plateau (10) et notamment sur le joint d'étanchéité (106'). Pour passer en position ouverte, et comme représenté en figure 2, l'utilisateur alimente les vérins (51, 151, 251), ce qui a pour effet de faire descendre d'une même hauteur les extrémités (53a, 53'a, 153a, 153'a, 253a, 253'a) des bras (53, 53', 153, 153', 253, 253') et entraîne donc en translation verticale descendante l'ensemble de la structure solidarisée à l'élément (20) assurant aussi la translation verticale descendante de l'obturateur (30). Ceci a pour effet de libérer un espace par lequel les granulés peuvent passer dans le contenant inférieur (2). Si l'utilisateur souhaite régler plus finement le débit de granulés, et comme représenté en figure 3, il alimente moins les vérins (51, 151, 251) pour remonter les tiges (56, 156, 256) des vérins, cela a pour effet de provoquer la translation verticale ascendante des extrémités (53a, 53'a, 153a, 153'a, 253a, 253'a) des bras (53, 53', 153, 153', 253, 253') et donc d'entraîner en translation verticale ascendante toute la structure liée à l'élément, c'est à dire notamment l'obturateur (30) qui vient se rapprocher du joint d'étanchéité (106') du plateau (10).

Le dispositif selon l'invention permet donc d'obtenir un dispositif réglable de transfert en gravité de pulvérulent ou de granulés.

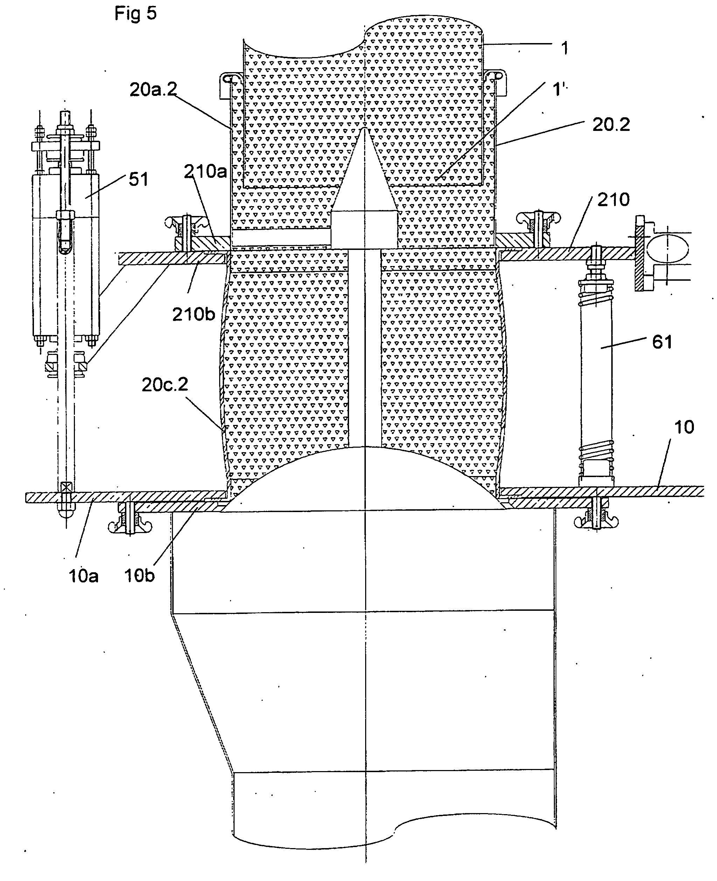

La figure 5 représente une vue en coupe du dispositif de transfert par gravité de pulvérulent ou de granulés en position fermée selon un deuxième mode de réalisation. Dans ce second mode de réalisation, tous les dispositifs liés aux vérins (51,151,251), aux ressorts (61,161,261) à l'obturateur (30) sont identiques à ceux décrits dans les figures 1, 2, 3, 4 relatifs à un premier mode de réalisation. Dans le second mode de réalisation, l'élément (20.2) présente des caractéristiques décrites ci-après permettant notamment de maximiser le débit de transfert par gravité de pulvérulent ou de granulés en position ouverte. En effet dans le premier mode de réalisation, l'élément (20) est rigide et dans sa partie basse (20c) il débouche par un étranglement de la partie basse (20c) dans une pièce de canalisation (101) solidaire du plateau (10). Dans le second mode de réalisation, la partie basse (20c.2) de l'élément (20.2) est flexible et entoure le passage (110) réalisé dans le plateau (10). La partie basse (20c.2) de l'élément (20.2) présente une forme cylindrique d'un diamètre égal au diamètre du passage (110). Cette partie basse (20c.2) est constituée d'un matériau flexible comme du plastique, de la toile ou du caoutchouc. Selon son extrémité inférieure, la partie basse (20c.2) de l'élément (20.2) est solidarisée au plateau (10) et délimite le passage (110). Comme représenté sur la figure 5, elle peut par exemple être solidarisée entre deux plaques (10a,10b) superposées et solidarisées qui constituent le plateau (10). Selon son extrémité supérieure, la partie basse (20c.2) de l'élément (20.2) est solidarisée à l'extrémité inférieure de la partie haute (20a.2) de l'élément (20). La partie haute (20a.2) de l'élément (20) présente une forme cylindrique d'un diamètre égal à celui du passage (110). Elle est rigide, constituée par exemple de métal, et entoure l'ouverture de vidange (1') du contenant supérieur (1). La partie haute (20a.2) de l'élément (20) est solidaire d'un plateau (210) constitué de deux plaques (210a,210b) superposées et solidarisées. Le plateau (210) présente une forme d'anneau circulaire dont le diamètre intérieur est égal à celui du diamètre extérieur de la partie haute (20a.2) de l'élément (20.2) et dont le rayon extérieur est inférieur à la distance séparant les vérins (51,151,251) de l'axe dé symétrie de l'élément (20). La fonction du plateau (210) est de servir de support de liaison entre la partie haute (20a.2) de l'élément (20.2) et les moyens de soutènement (53, 53', 153, 153', 253, 253') et les moyens élastiques (61,161,261).

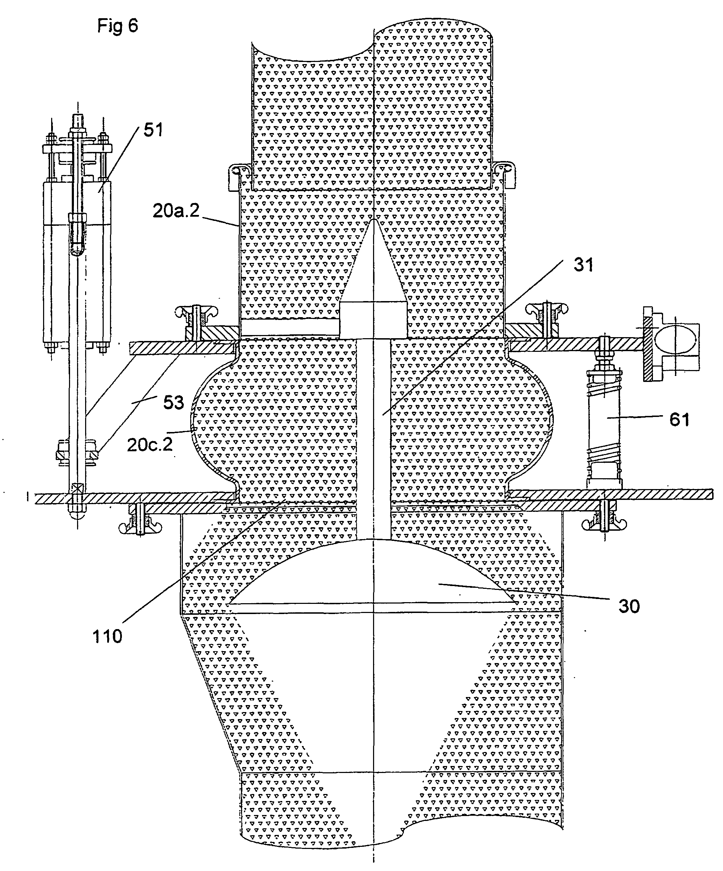

La figure 6 représente le dispositif de transfert par gravité de pulvérulent ou de granulés en position ouverte selon le second mode de réalisation. Comme décrit pour les figures 1 à 3, l'utilisateur alimente les vérins (51,151,251) ce qui a pour effet de faire descendre d'une même hauteur les bras (53, 53', 153, 153', 253, 253') et donc d'entraîner en translation verticale vers le bas l'ensemble de la structure solidarisée à l'entonnoir (20.2) assurant la descente verticale de l'obturateur (30) et donc libérant un espace entre le passage (110) et l'obturateur (30) par lequel les granules peuvent passer dans le contenant inférieur (2). La partie basse (20c.2) de l'élément (20.2) qui est flexible s'affaisse et se bombe sous la pression des granules. Les granules tombent à travers une section utile variable qui est égale à celle du diamètre du passage (110) moins celle de la tige d'obturateur (31) au niveau du passage. Par ailleurs, la descente de l'obturateur (30) n'est limitée que par la course des vérins tandis que dans le premier mode de réalisation, le débit était limité par le rétrécissement de la partie basse (20C) de l'élément (20). Le second mode de réalisation présente donc l'avantage par rapport au premier mode de réalisation de pouvoir augmenter le débit maximum de granules en position ouverte.

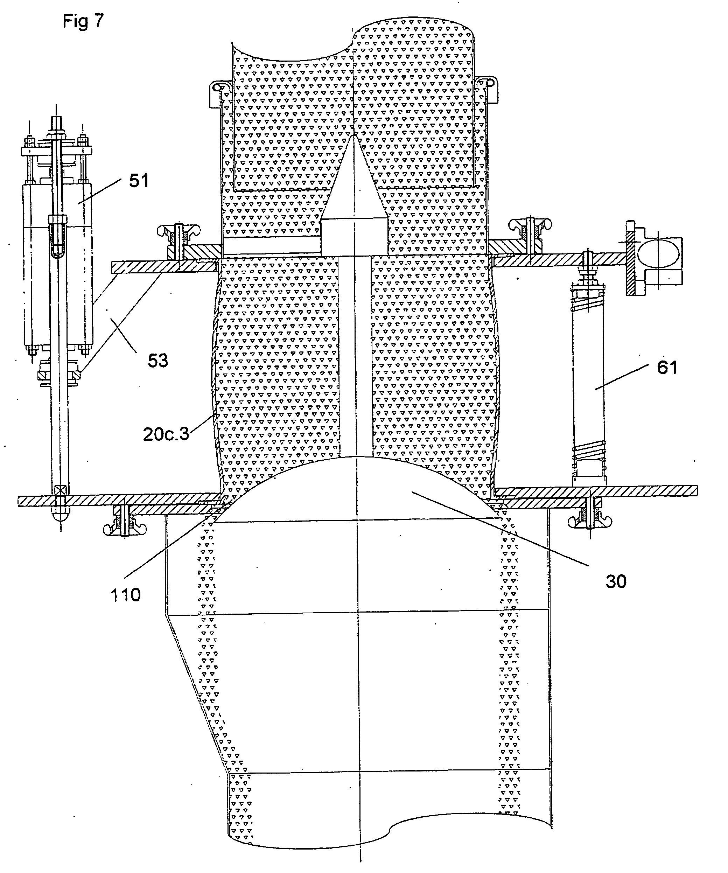

La figure 7 représente le dispositif de transfert par gravité de pulvérulent ou de granules en position à ouverture réduite. Comme décrit pour les figures 1 à 3, l'utilisateur alimente moins les vérins (51,151,251) ce qui a pour effet de diminuer la distance séparant l'obturateur (30) du passage (110) et donc de diminuer le débit de granules. La partie basse (20a.2) flexible de l'élément (20) présente alors une forme générale cylindrique mais toutefois légèrement bombée sous la pression des granules.

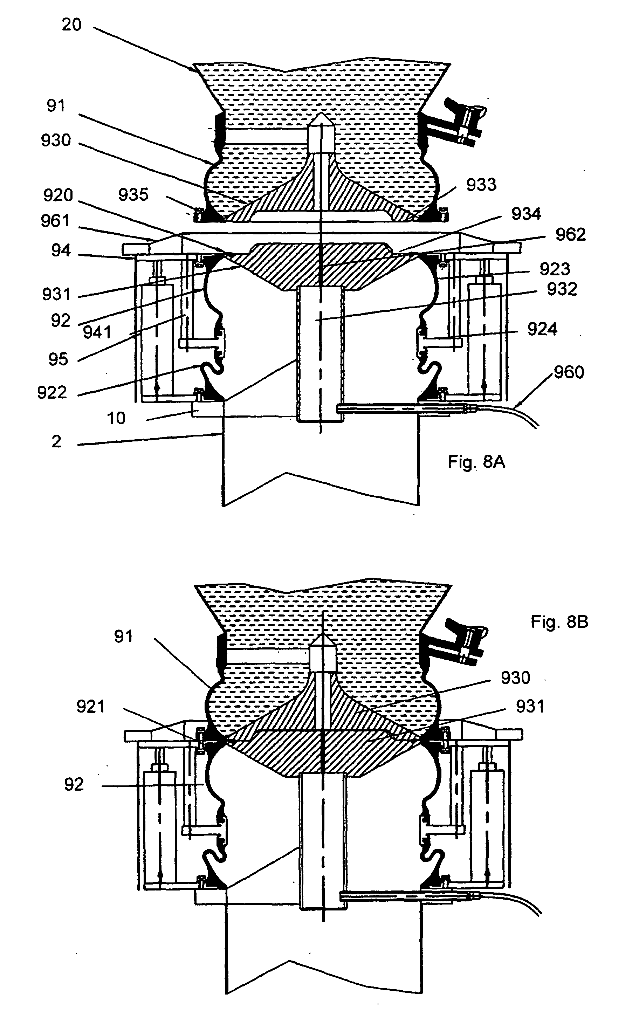

Un troisième mode de réalisation va à présent être décrit en référence aux figures 8A à 8D.

Selon ce troisième mode de réalisation, la partie basse (91) de l'élément (20) du dispositif de transfert est flexible conformément au deuxième mode de réalisation décrit précédemment en référence aux figures 5 à 7. La différence entre le troisième mode de réalisation et le premier ou le deuxième mode de réalisation réside dans la structure et le fonctionnement des moyens (930, 931) de fermeture et dans l'agencement de la partie (91) supérieure du contenant (2) inférieur.

La partie (91, fig.8A) basse de l'élément (20) comprend donc un cylindre de matériau souple monté sur les extrémités de moyens élastiques (non représentés) conforme aux moyens élastiques (61 de la figure. 5). Selon le troisième mode de réalisation, les moyens (930, 931) de fermeture sont formés de deux parties complémentaires. Une première partie (930) est montée dans la partie basse (91) de l'élément (20) et la deuxième partie (931) est monté dans un élément (92) intermédiaire monté sur la partie supérieure du contenant (2) inférieur. La première partie (930) des moyens d'ouverture est fixée à la partie basse de l'élément (20) conformément aux deux premiers modes de réalisation décrit précédemment.

En l'absence de transfert de produit pulvérulent entre le contenant supérieur et le contenant (2) inférieur, les moyens élastiques assurent le contact entre la partie (91) basse et la première partie (930) des moyens de fermeture pour maintenir l'étanchéité de l'élément (20).

Le plateau (10) tel que décrit en référence à la figure 1 est fixé sur l'extrémité supérieure du contenant (2) inférieur. Le plateau (10) permet l'assemblage de l'élément (92) intermédiaire. Cet élément (92) intermédiaire assure notamment le guidage du flux de matériau pulvérulent vers le contenant (2) inférieur et l'étanchéité de la connexion entre le contenant supérieur et le contenant (2) inférieur. L'élément (92) intermédiaire comprend, par exemple, une enveloppe cylindrique réalisée dans un matériau flexible. Ce matériau est sensiblement de même nature que la matériau constituant la partie (91) basse de l'élément (20). Le diamètre de l'enveloppe (92) cylindrique est sensiblement le même que le diamètre de la partie basse (91) de l'élément (20). L'extrémité (920) inférieure de l'enveloppe (92) intermédiaire est solidaire du plateau (10) tandis que l'extrémité (921) supérieure de l'enveloppe (92) est solidaire d'un plateau (94) intermédiaire. Le plateau (94) intermédiaire est monté sur le plateau (10) par l'intermédiaire d'au moins un vérin (95) ou moyens de mise en translation équivalents.

Selon le mode de réalisation représenté aux figures 8A à 8D, l'enveloppe (92) intermédiaire est réalisée en deux parties (921, 922), par exemple, sensiblement de même hauteur. Les deux parties sont assemblées d'un part à un anneau (924) fixé au plateau (94) intermédiaire par l'intermédiaire d'un équerre (941) et d'autre part, soit au plateau (94) intermédiaire pour la partie (923) supérieure de l'enveloppe (92) intermédiaire, soit au plateau (10) pour la partie (922) inférieure de l'enveloppe (92) intermédiaire. Ainsi, les déformations de la partie inférieure (922) de l'enveloppe (92) intermédiaire est liée aux mouvements relatifs du plateau inférieur (10) par rapport au plateau intermédiaire (94).

Comme expliqué précédemment, la deuxième partie (931) des moyens d'ouverture est montée dans l'élément (92) intermédiaire. Pour ce faire, la deuxième partie (931) des moyens d'ouverture comprend, selon son axe longitudinal, un tube (932) fixé au plateau par l'intermédiaire d'au moins une patte (97) de fixation formant par exemple un système de croisillon. Ainsi, la deuxième partie (931) des moyens d'ouverture est fixe en translation par rapport au contenant (2) inférieur.

Les faces (933, 934) en vis-à-vis des deux parties (931, 932) des moyens d'ouverture sont de formes complémentaires et choisies de sorte que les deux parties (931, 932) des moyens d'ouverture puissent, par exemple, s'emboîter l'une dans l'autre.

La figure 8A représente le dispositif selon la troisième mode de réalisation dans une position dite de prépositionnement. Dans cette position, la partie (91) basse de l'élément (20) est en contact avec la première partie (930) des moyens d'ouverture pour assurer l'étanchéité du contenant supérieur. L'extrémité (921) supérieure de l'enveloppe (92) intermédiaire est en contact avec la deuxième partie (931) des moyens d'ouverture pour assurer l'étanchéité du contenant (2) inférieur. Les faces (933, 934) en vis-à-vis des deux parties (931, 932) des moyens d'ouverture sont distantes l'une de l'autre. Dans cette position, l'étanchéité d'un des contenants est assurée indépendamment de celle de l'autre contenant. Ainsi, le risque de contamination devient inexistant et permet une connexion hors-poussière. De même, selon le troisième mode de réalisation, il est possible de prévoir un système de nettoyage. Ce système de nettoyage a pour objectif de débarrasser de tout produit contaminant la surface de contact entre les deux parties (931, 930) des moyens d'ouverture. Ce système comprend, par exemple, des moyens (960) d'injection d'air. Ces moyens (960) d'injection d'air sont connectés au tube (932) assurant le montage de la deuxième partie (931) des moyens d'ouverture. La deuxième partie (931) des moyens d'ouverture comprend alors, par exemple, selon son axe longitudinal et en vis-à-vis de l'extrémité du tube (932) un canal (962) qui débouche par la face (934) en vis-à-vis de la face (933) de la première partie (930) des moyens d'ouverture. Ainsi, par injection d'air sous pression dans le tube (932), les impuretés éventuellement présentes sur les faces (933, 934) en vis-à-vis des deux parties (931, 932) des moyens d'ouverture sont évacuées. Le système de nettoyage peut également comprendre des moyens (961) d'aspiration d'air disposés sur le plateau (94) et destinés à aspirer l'air situé entre les deux parties (930, 931) des moyens d'ouverture. Ainsi, par l'action simultanée ou non, des moyens (962) d'injection d'air et des moyens (961) d'aspiration d'air, l'espace délimité par les faces (933, 934) en vis-à-vis des deux parties (931, 932) des moyens d'ouverture est débarrassé des impuretés susceptibles de contaminer le matériau pulvérulent transporté.

La figure 8B représente le dispositif selon la troisième mode de réalisation dans une position dite assemblée. Dans cette position, la circulation du matériau pulvérulent entre le contenant supérieur et le contenant inférieur est toujours interdite par le contact entre la première (930), respectivement deuxième (931) partie des moyens d'ouverture et l'élément (935), respectivement l'élément (92) intermédiaire. Dans cette position les faces (933, 934) en vis-à-vis des deux parties (931, 932) des moyens d'ouverture sont amenées en contact, par exemple un mouvement relatif de l'un des deux éléments (20) ou (94). Par conséquent, les première et deuxième parties (930, 931) des moyens d'ouverture sont emboîtées l'une dans l'autre et emprisonnent ainsi, les éventuelles impuretés résiduelles. L'étanchéité de l'assemblage des deux parties (930, 931) des moyens d'ouverture est, par exemple, assurée par un joint (920) placé sur le périmètre de l'une des parties (930, 931) des moyens d'ouverture. Lors de l'assemblage, ce joint (920) s'engage dans une rainure (935) réalisée dans l'autre partie des moyens d'ouverture. Selon cette position, l'extrémité inférieure de la partie (91) basse de l'élément (20) est également en contact étanche avec l'extrémité (921) supérieure de l'enveloppe (92) intermédiaire. Pour améliorer l'étanchéité du contact entre l'extrémité inférieure (930) de l'obturateur supérieur et l'extrémité supérieure (931) de l'obturateur inférieur, ces derniers comportent une gorge périphérique et des moyens d'aspiration (960, 932, 962) permettant de réaliser un vide relatif. En réalisant ainsi cette association des pièces (930, 931) il est aisé de comprendre que le dispositif permet de réaliser une connexion hors poussière.

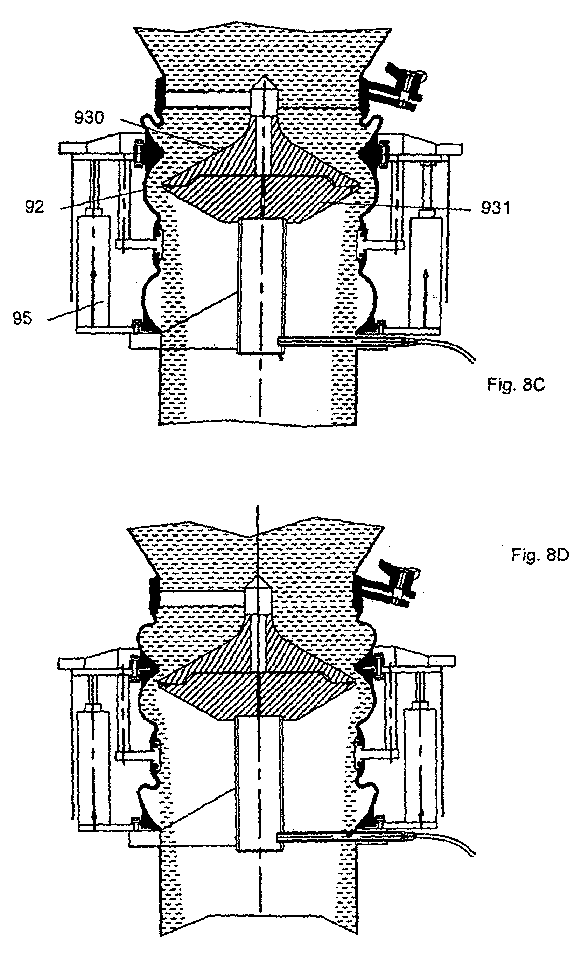

La figure 8C représente le dispositif selon la troisième mode de réalisation dans une position dite d'ouverture. Cette position est obtenue par l'actionnement des vérins (95). Le mouvement des vérins (95) a pour action de déplacer la zone de contact entre l'extrémité inférieure de la partie (91) basse de l'élément (20) et l'extrémité (921) supérieure de l'enveloppe (92) intermédiaire par rapport aux deux parties (930, 931) assemblées des moyens d'ouverture. Selon le troisième mode de réalisation représenté à la figure 8C, le déplacement de la zone de contact s'effectue de sorte que celle-ci se situe au-dessus de la première partie (930) des moyens d'ouverture. Ainsi, un espace est libéré entre les moyens d'ouverture et l'enveloppe (92) intermédiaire pour autoriser l'écoulement du matériau pulvérulent. Sous l'effet de la pression d'écoulement, l'enveloppe (92) intermédiaire se bombe pour faciliter l'écoulement.

La figure 8D représente le dispositif selon la troisième mode de réalisation dans une position dite d'ouverture réduite. La différence avec la position représentée à la figure 8C est que dans la position représentée à la figure 8D, l'espace libéré entre les moyens d'ouverture et l'enveloppe (92) intermédiaire est diminué par le mouvement des vérins (95) dans le sens de retour à la position assemblée, dans laquelle la partie inférieure (922) de l'enveloppe forme des plis.

L'invention porte donc sur un dispositif réglable de transfert par gravité de pulvérulent ou granulés entre un contenant supérieur (1) muni d'au moins une ouverture de vidange (1') débouchant vers le bas et un contenant inférieur (2) muni d'au moins une ouverture de remplissage (2') débouchant vers le haut, caractérisé en ce qu'il comprend un élément (20, 20.2) de canalisation dont la partie haute (20a, 20a.2) entoure l'ouverture de vidange (1') du contenant supérieur, la partie basse (20c, 20c.2, 91) de l'élément (20, 20.2) étant reliée à un plateau (10) fixé au ras de l'ouverture de remplissage (2') du contenant inférieur (2), ce plateau (10) étant muni d'un passage (110) situé au-dessus de l'ouverture (2') du contenant (2) inférieur, et en ce que l'élément (20, 20.2) est au moins partiellement actionnable en translation par des moyens de mise en translation qui permettent d'obturer ou de libérer de façon réglable le passage (110) grâce à des moyens (30, 930, 931) de fermeture et d'ouverture au moins partiellement solidaires de l'élément (20, 20.2), pour permettre l'écoulement des pulvérulents ou granulés.

Dans un autre mode de réalisation, la partie basse (20c) de l'élément (20) débouche dans une pièce de canalisation (101) solidaire du plateau (10), la pièce de canalisation (101) entourant le passage (110).

Dans un autre mode de réalisation, la partie basse (20c.2) de l'élément (20.2) est flexible et solidarisée au plateau (10), et la partie basse (20c.2) de l'élément (20.2) entoure le passage (110).

Dans un autre mode de réalisation, le passage (110) situé au-dessus de l'ouverture (2') du contenant (2) inférieur est d'un diamètre inférieur à l'ouverture (2') du contenant (2) inférieur.

Dans un autre mode de réalisation, les moyens (30) de fermeture et d'ouverture sont un obturateur.

Dans un autre mode de réalisation, l'obturateur (30) est en forme de calotte sphérique.

Dans un autre mode de réalisation, l'obturateur (30) est solidarisé à une tige d'obturateur (31) selon une des extrémités (31b) de la tige d'obturateur (31), selon son autre extrémité (31a) la tige d'obturateur (31) est solidarisée à une structure métallique (32) elle même solidarisée aux parois internes de l'élément (20, 20.2).

Dans un autre mode de réalisation, un dôme (80) entoure l'axe vertical de symétrie de l'élément (20, 20.2) et recouvre une partie de la structure métallique (32).

Dans un autre mode de réalisation, l'élément (20, 20.2) et les moyens de fermeture et d'ouverture (30) solidaires de l'élément (20, 20.2) sont actionnés en translation par des moyens (51, 151, 251) de mise en translation disposés à l'extérieur de l'élément mais solidaires de l'élément par des moyens de soutènement (53, 53', 153, 153', 253, 253').

Dans un autre mode de réalisation, les moyens de mise en translation (51, 151, 251) comprennent au moins un vérin.

Dans un autre mode de réalisation, les moyens de soutènement (53, 53', 153, 153', 253, 253') comprennent au moins un bras dont une extrémité (53a, 53'a, 153a, 153'a, 253a, 253'a) est actionnée en translation par un support (55, 155, 255) fixé sur la tige (56, 156, 256) de chaque vérin et dont l'autre extrémité (53b, 53'b, 153b, 153'b, 253b, 253'b) est solidarisée à l'élément (20, 20.2).

Dans un autre mode de réalisation, l'élément (20) est soutenu par des moyens élastiques (61, 161, 261) disposés entre le plateau (10) et des bras de suspension (62, 162, 262).

Dans un autre mode de réalisation, l'élément (20.2) est soutenu par des moyens élastiques (61, 161, 261) disposés entre le plateau (10) et un plateau (210) solidarisé à la partie haute (20a.2) de l'élément (20.2).

Dans un autre mode de réalisation, l'élément (20, 20.2) est rendu solidaire de moyens de mise en vibration (63, 163, 263).

Dans un autre mode de réalisation, les moyens de mise en vibration (63, 163, 263) de l'élément (20) sont solidarisés aux bras (62, 162, 262) soutenus par les moyens élastiques (61, 161, 261).

Dans un autre mode de réalisation, les moyens de mise en vibration (63, 163, 263) de l'élément (20.2) sont solidarisés au plateau (210) solidarisé à la partie haute (20a.2) de l'élément (20.2).

Dans un autre mode de réalisation, l'axe de la tige (56) du vérin (51), l'axe du ressort (61) et l'axe de symétrie de l'élément (20, 20.2) sont parallèles et contenus dans un même plan, le vérin (51) et le ressort (61) sont disposés de part et d'autre de l'axe de symétrie de l'élément (20, 20.2) et en ce que l'axe de la tige (156) du vérin (151), l'axe du ressort (161) et l'axe de symétrie de l'élément (20, 20.2) sont parallèles et contenus dans un même plan, le vérin (151) et le ressort (161) sont disposés de part et d'autre de l'axe de symétrie de l'élément (20, 20.2) et en ce que l'axe de la tige (256) du vérin (251), l'axe du ressort (261) et l'axe de symétrie de l'élément (20, 20.2) sont parallèles et contenus dans un même plan, le vérin (251) et le ressort (261) sont disposés de part et d'autre de l'axe de symétrie de l'élément (20, 20.2) et en ce que ces trois plans forment deux à deux un angle de 120°.

Dans un autre mode de réalisation, le dispositif réglable de transfert par gravité de pulvérulent ou de granulés comporte des moyens d'étanchéité (41) disposés entre l'élément (20, 20.2) et le contenant supérieur (1).

Dans un autre mode de réalisation, le dispositif réglable de transfert par gravité de pulvérulent ou de granulés comporte des moyens d'étanchéité (42) disposés entre la pièce de canalisation (101) du plateau (10) et l'élément (20).

Dans un autre mode de réalisation, les moyens d'ouverture sont en deux parties (930, 931), une première partie (930) est solidaire de la partie basse (91) de l'élément (20) pour assurer dans une position, l'étanchéité du contenant supérieur et la deuxième partie (931) est montée dans un élément (92) intermédiaire pour assurer l'étanchéité du contenant inférieur, l'élément (92) intermédiaire étant monté entre la partie inférieure de l'élément (20) et le plateau (10).

Dans un autre mode de réalisation, l'élément (92) intermédiaire est réalisé en matériau flexible.

Dans un autre mode de réalisation, l'extrémité (924) inférieure de l'élément (92) intermédiaire est fixée sur le plateau (10) et l'extrémité (921) supérieure de l'élément (92) intermédiaire est fixée sur un plateau intermédiaire, le plateau (94) intermédiaire étant mobile en translation selon l'axe vertical par rapport au plateau (10).

Dans un autre mode de réalisation, l'élément (92) intermédiaire comprend une première enveloppe (922) fixée d'une part au plateau (10) et d'autre part à un anneau (924) rigide, et une deuxième enveloppe (923) fixée d'une part au plateau (94) intermédiaire et d'autre part à l'anneau (924) rigide, l'anneau (924) étant solidarisé au plateau (94) intermédiaire et fixe en position par rapport au plateau.

Dans un autre mode de réalisation, le dispositif comprend des moyens (960, 961) de nettoyage de l'espace délimité par les faces (933, 934) en vis-à-vis des deux parties (930, 931) constituant les moyens d'ouverture.

Dans un autre mode de réalisation, les moyens de nettoyage comprennent des moyens (960, 962) d'injection d'air dans l'espace délimité par les faces (933, 934) en vis-à-vis des deux parties (930, 931) constituant les moyens d'ouverture, par un canal (962) traversant la partie (931) inférieure des moyens d'ouverture.

Dans un autre mode de réalisation, les moyens de nettoyage comprennent des moyens (920) d'aspiration d'air monté sur le plateau (94) intermédiaire pour aspirer l'air de l'espace délimité par les faces (933, 934) en vis-à-vis des deux parties (930, 931) constituant les moyens d'ouverture.

Dans un autre mode de réalisation, le dispositif comprend un obturateur mobile entre deux positions et disposé dans un canal de liaison entre le contenant supérieur (1) et le contenant inférieur (2).

Dans un autre mode de réalisation, l'obturateur mobile comporte un plateau (94) relié par un manchon (91) supérieur déformable au contenant supérieur et un manchon déformable (922) relié au contenant inférieur (2), des moyens d'actionnement du plateau entre trois positions.

Dans un autre mode de réalisation, le dispositif comporte une position d'ouverture dans laquelle l'obturateur est en vis-à-vis d'un manchon intermédiaire (923) de diamètre supérieur à l'obturation dans au moins une position et reliant le manchon supérieur au manchon inférieur pour permettre l'écoulement autour de l'obturateur.

Dans un autre mode de réalisation, le dispositif comporte une deuxième position de fermeture dans laquelle l'obturateur vient en appui sur le manchon supérieur (91) et le déforme.

Dans un autre mode de réalisation, le dispositif comporte une troisième position de nettoyage dans laquelle la position (94) est la plus proche du plateau (10) solidaire du contenant inférieur et l'obturateur séparé en deux parties (930, 931), une partie (930) assurant avec le manchon (91) supérieur l'étanchéité du contenant supérieur et une partie (931) assurant avec le manchon intermédiaire (922) l'étanchéité du contenant inférieur (2).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif réglable de transfert par gravité de pulvérulent ou granulés entre un contenant supérieur (1) muni d'au moins une ouverture de vidange (1') débouchant vers le bas et un contenant inférieur (2) muni d'au moins une ouverture de remplissage (2') débouchant vers le haut, **caractérisé en ce que** le dispositif comprend un élément (20, 20.2) de canalisation dont la partie haute (20a, 20a.2) entoure l'ouverture de vidange (1') du contenant supérieur, la partie basse (20c, 20c.2, 91) de l'élément (20, 20.2) étant reliée à un plateau (10) fixé au ras de l'ouverture de remplissage (2') du contenant inférieur (2), ce plateau (10) étant muni d'un passage (110) situé au-dessus de l'ouverture (2') du contenant inférieur (2), et **en ce que** l'élément (20, 20.2) est au moins partiellement actionnable en translation par des moyens de mise en translation qui permettent d'obturer ou de libérer de façon réglable le passage (110) grâce à des moyens (30, 930, 931) de fermeture et d'ouverture au moins partiellement solidaires de l'élément (20, 20.2), pour permettre l'écoulement des pulvérulents ou granulés.

2. Dispositif réglable de transfert par gravité de pulvérulent ou granulés selon la revendication 1, **caractérisé en ce que** la partie basse (20c) de l'élément (20) débouche dans une pièce de canalisation (101) solidaire du plateau (10), la pièce de canalisation (101) entourant le passage (110).

3. Dispositif réglable de transfert par gravité de pulvérulent ou granulés selon la revendication 1, **caractérisé en ce que** la partie basse (20c.2) de l'élément (20.2) est flexible et solidarisée au plateau (10), et **en ce que** la partie basse (20c.2) de l'élément (20.2) entoure le passage (110).

4. Dispositif réglable de transfert par gravité de pulvérulent ou de granulés selon la revendication 2 ou 3, **caractérisé en ce que** le passage (110) situé au-dessus de l'ouverture (2') du contenant (2) inférieur est d'un diamètre inférieur à l'ouverture (2') du contenant (2) inférieur.

5. Dispositif réglable de transfert par gravité de pulvérulent ou de granulés selon l'une des revendications 1 à 4, **caractérisé en ce que** les moyens (30) de fermeture et d'ouverture sont un obturateur.

6. Dispositif réglable de transfert par gravité de pulvérulent ou de granulés selon la revendication 5, **caractérisé en ce que** l'obturateur (30) est en forme de calotte sphérique.

7. Dispositif de transfert par gravité de pulvérulent ou de granulés selon la revendication 5 ou 6, **caractérisé en ce que** l'obturateur (30) est solidarisé à une tige d'obturateur (31) selon une des extrémités (31b) de la tige d'obturateur (31), selon son autre extrémité (31a) la tige d'obturateur (31) est solidarisée à une structure métallique (32) elle même solidarisée aux parois internes de l'élément (20, 20.2).

8. Dispositif de transfert par gravité de pulvérulent ou de granulés selon la revendication 7, **caractérisé en ce qu'**un dôme (80) entoure l'axe vertical de symétrie de l'élément (20, 20.2) et recouvre une partie de la structure métallique (32).

9. Dispositif réglable de transfert par gravité de pulvérulent ou de granulés selon une des revendications 1 à 8, **caractérisé en ce que** l'élément (20, 20.2) et les moyens de fermeture et d'ouverture (30) solidaires de l'élément (20, 20.2) sont actionnés en translation par des moyens (51, 151, 251) de mise en translation disposés à l'extérieur de l'élément mais solidaires de l'élément par des moyens de soutènement (53, 53', 153, 153', 253, 253').

10. Dispositif réglable de transfert par gravité de pulvérulent ou de granulés selon la revendication 9, **caractérisé en ce que** les moyens de mise en translation (51, 151, 251) comprennent au moins un vérin.

11. Dispositif réglable de transfert par gravité de pulvérulent ou de granulés selon la revendication 10, **caractérisé en ce que** les moyens de soutènement (53, 53', 153, 153', 253, 253') comprennent au moins un tube dont une extrémité (53a, 53'a, 153a, 153'a, 253a, 253'a) est actionnée en translation par un support (55, 155, 255) fixé sur la tige (56, 156, 256) de chaque vérin et dont l'autre extrémité (53b, 53'b, 153b, 153'b, 253b, 253'b) est solidarisée à l'élément (20, 20.2).

12. Dispositif réglable de transfert par gravité de pulvérulent ou de granulés selon une des revendications 2 ou 4 à 11 si dépendantes de la revendication 2, **caractérisé en ce que** l'élément (20) est soutenu par des moyens élastiques (61, 161, 261) disposés entre le plateau (10) et des bras de suspension (62, 162, 262).

13. Dispositif réglable de transfert par gravité de pulvérulent ou de granules selon une des revendications 3 à 11 si dépendantes de la revendication 3, **caractérisé en ce que** l'élément (20.2) est soutenu par des moyens élastiques (61, 161, 261) disposés entre le plateau (10) et un plateau (210) solidarisé à la partie haute (20a.2) de l'élément (20.2).

14. Dispositif réglable de transfert par gravité de pulvérulent ou de granulés selon la revendication 12 ou 13, **caractérisé en ce que** l'élément (20, 20.2) est rendu solidaire de moyens de mise en vibration (63, 163, 263).

15. Dispositif de transfert par gravité de pulvérulent ou de granulés selon la revendication 13, **caractérisé en ce que** les moyens de mise en vibration (63, 163, 263) de l'élément (20) sont solidarisés aux bras (62, 162, 262) soutenus par les moyens élastiques (61, 161, 261).

16. Dispositif de transfert par gravité de pulvérulent ou de granulés selon la revendication 13, **caractérisé en ce que** les moyens de mise en vibration (63, 163, 263) de l'élément (20.2) sont solidarisés au plateau (210) solidarisé à la partie haute (20a.2) de l'élément (20.2)

17. Dispositif de transfert par gravité de pulvérulent ou de granulés selon la revendication 11, **caractérisé en ce que** l'axe de la première tige (56) du premier vérin (51), l'axe du premier ressort (61) et l'axe de symétrie de l'élément (20, 20.2) sont parallèles et contenus dans un même premier plan, le premier vérin (51) et le premier ressort (61) sont disposés de part et d'autre de l'axe de symétrie de l'élément (20, 20.2) et **en ce que** l'axe de la deuxième tige (156) du deuxième vérin (151), l'axe du deuxième ressort (161) et l'axe de symétrie de l'élément (20, 20.2) sont parallèles et contenus dans un même deuxième plan, le deuxième vérin (151) et le deuxième ressort (161) sont disposés de part et d'autre de l'axe de symétrie de élément (20,20.2) et **en ce que** l'axe de la troisième tige (256) du troisième vérin (251), l'axe du troisième ressort (261) et l'axe de symétrie de l'élément (20, 20.2) sont parallèles et contenus dans un même troisième plan, le troisième vérin (251) et le troisième ressort (261) sont disposés de part et d'autre de l'axe de symétrie de l'élément (20, 20.2) et **en ce que** ces premier deuxième et troisième plans forment deux à deux un angle de 120°.

18. Dispositif réglable de transfert par gravité de pulvérulent ou de granulés selon une des revendications 1 à 17, **caractérisé en ce qu'**il comporte des moyens d'étanchéité (41) disposés entre l'élément (20, 20.2) et le contenant supérieur (1).

19. Dispositif réglable de transfert par gravité de pulvérulent ou de granulés selon une des revendications 2 ou 4 à 18 si dépendantes de la revendication 2, **caractérisé en ce qu'**il comporte des moyens d'étanchéité (42) disposés entre la pièce de canalisation (101) du plateau (10) et l'élément (20).

20. Dispositif réglable de transfert par gravité de pulvérulent ou de granulés selon la revendication 1, **caractérisé en ce que** les moyens d'ouverture sont en deux parties (930, 931), une première partie (930) est solidaire de la partie basse (91) de l'élément (20) pour assurer dans une position l'étanchéité du contenant supérieur et la deuxième partie (931) est montée dans un élément (92) intermédiaire pour assurer l'étanchéité du contenant inférieur, l'élément (92) intermédiaire étant monté entre la partie inférieure de l'élément (20) et le plateau (10).

21. Dispositif réglable de transfert par gravité de pulvérulent ou de granulés selon la revendication 20, **caractérisé en ce que** l'élément (92) intermédiaire est réalisé en matériau flexible.

22. Dispositif réglable de transfert par gravité de pulvérulent ou de granulés selon la revendication 20 ou 21, **caractérisé en ce que** l'extrémité (922) inférieure de l'élément (92) intermédiaire est fixée sur le plateau (10) et l'extrémité (921) supérieure de l'élément (92) intermédiaire est fixée sur un plateau intermédiaire, le plateau (94) intermédiaire étant mobile en translation selon l'axe vertical par rapport au plateau (10).

23. Dispositif réglable de transfert par gravité de pulvérulent ou de granulés selon la revendication 22, **caractérisé en ce que** l'élément (92) intermédiaire comprend une première enveloppe (922) fixée d'une part au plateau (10) et d'autre part à un anneau (924) rigide, et une deuxième enveloppe (923) fixée d'une part au plateau (94) intermédiaire et d'autre part à l'anneau (924) rigide, l'anneau (924) étant solidarisé au plateau (94) intermédiaire et fixe en position par rapport au plateau.

24. Dispositif réglable de transfert par gravité de pulvérulent ou de granulés selon l'une des revendications 20 à 23, **caractérisé en ce qu'**il comprend des moyens (920, 921) de nettoyage de l'espace délimité par les faces (933, 934) en vis-à-vis des deux parties (930, 931) constituant les moyens d'ouverture, ces moyens permettant une connexion hors poussière.

25. Dispositif réglable de transfert par gravité de pulvérulent ou de granulés selon la revendication 24, **caractérisé en ce que** les moyens de nettoyage comprennent des moyens (960, 962) d'injection d'air dans l'espace délimité par les faces (933, 934) en vis-à-vis des deux parties (930, 931) constituant les moyens d'ouverture, par un canal (962) traversant la partie (931) inférieure des moyens d'ouverture.

26. Dispositif réglable de transfert par gravité de pulvérulent ou de granulés selon la revendication 24 ou 25, **caractérisé en ce que** les moyens de nettoyage comprennent des moyens (920) d'aspiration d'air monté sur le plateau (94) intermédiaire pour aspirer l'air de l'espace délimité par les faces (933, 934) en vis-à-vis des deux parties (930, 931) constituant les moyens d'ouverture, ces moyens permettant une connexion hors poussière.

27. Dispositif réglable de transfert par gravité de pulvérulent ou de granulés selon la revendication 23, **caractérisé en ce qu'**il comporte une position d'ouverture dans laquelle les moyens d'ouverture (930, 931) sont en vis-à-vis de la deuxième enveloppe (923) de l'élément intermédiaire (92), de diamètre supérieur à celui des moyens d'ouverture dans au moins une position pour permettre l'écoulement autour des moyens d'ouverture.

28. Dispositif réglable de transfert par gravité de pulvérulent ou de granulés selon la revendication 20, **caractérisé en ce qu'**il comporte une position de fermeture dans laquelle les moyens d'ouverture (930, 931) viennent en appui sur la partie basse (91) de l'élément (20) et la déforment.

29. Dispositif réglable de transfert par gravité de pulvérulent ou de granulés selon la revendication 26, **caractérisé en ce qu'**il comporte une position de nettoyage dans laquelle les éléments d'ouverture sont séparés en deux parties (930, 931) supérieure et inférieure, la partie (930) supérieure des moyens d'ouverture assurant avec la partie basse (91) de l'élément (20) l'étanchéité du contenant supérieur et la partie (931) inférieure des moyens d'ouverture assurant avec la première enveloppe (922) de l'élément intermédiaire (92) l'étanchéité du contenant inférieur (2).

## Claims

1. Adjustable device for transferring by gravity powder or granules between an upper container (1), provided with at least one downwardly open discharge aperture (1') and a lower container (2), provided with at least one upwardly open filling aperture (2'), **characterised in that** the device comprises a channelling element (20, 20.2), the upper part (20a, 20a.2) of which surrounds the discharge aperture (1') of the upper container, the lower part (20c, 20c.2, 91) of the element (20, 20.2) being connected to a plate (10) that is fixed level with the filling aperture (2') of the lower container (2), this plate (10) being provided with a passage (110) located above the aperture (2') of the lower container (2), and **in that** the element (20, 20.2) may, at least in part, be actuated in translation by translating means, which, using closing and opening means (30, 930, 931) that are, at least in part, integral with the element (20, 20.2), allow the passage (110) to be blocked or released in an adjustable manner, so as to allow the powders or granules to flow.

2. Adjustable device for transferring by gravity powder or granules according to claim 1, **characterised in that** the lower part (20c) of the element (20) opens into a channelling piece (101) which is integral with the plate (10), the channelling piece (101) surrounding the passage (110).

3. Adjustable device for transferring by gravity powder or granules according to claim 1, **characterised in that** the lower part (20c.2) of the element (20.2) is flexible and joined to the plate (10), and **in that** the lower part (20c.2) of the element (20.2) surrounds the passage (110).

4. Adjustable device for transferring by gravity powder or granules according to either claim 2 or claim 3, **characterised in that** the passage (110) located above the aperture (2') of the lower container (2) has a smaller diameter than the aperture (2') of the lower container (2).

5. Adjustable device for transferring by gravity powder or granules according to any one of claims 1 to 4, **characterised in that** the closing and opening means (30) are a shutter.

6. Adjustable device for transferring by gravity powder or granules according to claim 5, **characterised in that** the shutter (30) is in the shape of a spherical cap.

7. Device for transferring by gravity powder or granules according to either claim 5 or claim 6, **characterised in that** the shutter (30) is joined to a shutter rod (31), at one of the ends (31b) of the shutter rod (31), the shutter rod (31) being joined at its other end (31a) to a metal structure (32), which is itself joined to the internal walls of the element (20, 20.2).

8. Device for transferring by gravity powder or granules according to claim 7, **characterised in that** a dome (80) surrounds the vertical axis of symmetry of the element (20, 20.2) and covers a part of the metal structure (32).

9. Adjustable device for transferring by gravity powder or granules according to any one of claims 1 to 8, **characterised in that** the element (20, 20.2) and the closing and opening means (30), which are integral with the element (20, 20.2), are actuated in translation by translating means (51, 151, 251) which are arranged outside the element, but are joined to the element by support means (53, 53', 153, 153', 253, 253').

10. Adjustable device for transferring by gravity powder or granules according to claim 9, **characterised in that** the translating means (51, 151, 251) comprise at least one cylinder.

11. Adjustable device for transferring by gravity powder or granules according to claim 10, **characterised in that** the support means (53, 53', 153, 153', 253, 253') comprise at least one tube, one end (53a, 53'a, 153a, 153'a, 253a, 253'a) of which is actuated in translation by a support (55, 155, 255) fixed to the rod (56, 156, 256) of each cylinder, and the other end (53b, 53'b, 153b, 153'b, 253b, 253'b) of which is joined to the element (20, 20.2).

12. Adjustable device for transferring by gravity powder or granules according to any one of claims 2 or 4 to 11, insofar as they are dependent on claim 2, **characterised in that** the element (20) is supported by resilient means (61, 161, 261) arranged between the plate (10) and suspension arms (62, 162, 262).

13. Adjustable device for transferring by gravity powder or granules according to any one of claims 3 to 11, insofar as they are dependent on claim 3, **characterised in that** the element (20.2) is supported by resilient means (61, 161, 261) arranged between the plate (10) and a plate (210) joined to the upper part (20a.2) of the element (20.2).

14. Adjustable device for transferring by gravity powder or granules according to either claim 12 or claim 13, **characterised in that** the element (20, 20.2) is integral with vibrating means (63,163,263).

15. Device for transferring by gravity powder or granules according to claim 13, **characterised in that** the vibrating means (63, 163, 263) of the element (20) are joined to the arms (62, 162, 262) supported by the resilient means (61, 161, 261).

16. Device for transferring by gravity powder or granules according to claim 13, **characterised in that** the vibrating means (63, 163, 263) of the element (20.2) are joined to the plate (210), which is joined to the upper part (20a.2) of the element (20.2).

17. Device for transferring by gravity powder or granules according to claim 11, **characterised in that** the axis of the first rod (56) of the first cylinder (51), the axis of the first spring (61) and the axis of symmetry of the element (20, 20.2) are parallel and contained in a single first plane, the first cylinder (51) and the first spring (61) being arranged either side of the axis of symmetry of the element (20, 20.2), and **in that** the axis of the second rod (156) of the second cylinder (151), the axis of the second spring (161) and the axis of symmetry of the element (20, 20.2) are parallel and contained in a single second plane, the second cylinder (151) and the second spring (161) being arranged either side of the axis of symmetry of the element (20, 20.2), and **in that** the axis of the third rod (256) of the third cylinder (251), the axis of the third spring (261) and the axis of symmetry of the element (20, 20.2) are parallel and contained in a single third plane, the third cylinder (251) and the third spring (261) being arranged either side of the axis of symmetry of the element (20, 20.2), and **in that** the first, second and third planes form in pairs an angle of 120°.

18. Adjustable device for transferring by gravity powder or granules according to any one of claims 1 to 17, **characterised in that** it comprises sealing means (41) arranged between the element (20, 20.2) and the upper container (1).

19. Adjustable device for transferring by gravity powder or granules according to any one of claims 2 or 4 to 18, insofar as they are dependent on claim 2, **characterised in that** it comprises sealing means (42) arranged between the channelling piece (101) of the plate (10) and the element (20).

20. Adjustable device for transferring by gravity powder or granules according to claim 1, **characterised in that** the opening means comprise two parts (930, 931), a first part (930) being integral with the lower part (91) of the element (20), in order to seal the upper container in one position, and the second part (931) being mounted in an intermediate element (92), in order to seal the lower container, the intermediate element (92) being mounted between the lower part of the element (20) and the plate (10).

21. Adjustable device for transferring by gravity powder or granules according to claim 20, **characterised in that** the intermediate element (92) is made of a flexible material.

22. Adjustable device for transferring by gravity powder or granules according to either claim 20 or claim 21, **characterised in that** the lower end (922) of the intermediate element (92) is fixed to the plate (10), and the upper end (921) of the intermediate element (92) is fixed to an intermediate plate, the intermediate plate (94) being movable in translation along the vertical axis, relative to the plate (10).

23. Adjustable device for transferring by gravity powder or granules according to claim 22, **characterised in that** the intermediate element (92) comprises a first case (922), which is fixed to the plate (10), on the one hand, and to a rigid ring (924), on the other hand, and a second case (923), which is fixed to the intermediate plate (94), on the one hand, and to the rigid ring (924), on the other hand, the ring (924) being joined to the intermediate plate (94) and fixed in position relative to the plate.

24. Adjustable device for transferring by gravity powder or granules according to any one of claims 20 to 23, **characterised in that** it comprises means (920, 921) for cleaning the space delimited by the opposite faces (933, 934) of the two parts (930, 931) forming the opening means, these means facilitating a dust-free connection.

25. Adjustable device for transferring by gravity powder or granules according to claim 24, **characterised in that** the cleaning means comprise means (960, 962) for injecting air into the space delimited by the opposite faces (933, 934) of the two parts (930, 931) forming the opening means, via a channel (962) passing through the lower part (931) of the opening means.

26. Adjustable device for transferring by gravity powder or granules according to either claim 24 or claim 25, **characterised in that** the cleaning means comprise air intake means (920), mounted on the intermediate plate (94), for taking in air from the space delimited by the opposite faces (933, 934) of the two parts (930, 931) forming the opening means, these means facilitating a dust-free connection.

27. Adjustable device for transferring by gravity powder or granules according to claim 23, **characterised in that** it comprises an open position in which the opening means (930, 931) are opposite the second case (923) of the intermediate element (92), the diameter of which is greater than that of the opening means in at least one position, to facilitate flow around the opening means.

28. Adjustable device for transferring by gravity powder or granules according to claim 20, **characterised in that** it comprises a closed position in which the opening means (930, 931) rest on and deform the lower part (91) of the element (20).

29. Adjustable device for transferring by gravity powder or granules according to claim 26, **characterised in that** it comprises a cleaning position in which the opening elements are divided into an upper part and a lower part (930, 931), the upper part (930) of the opening means, together with the lower part (91) of the element (20), sealing the upper container, and the lower part (931) of the opening means, together with the first case (922) of the intermediate element (92), sealing the lower container (2).

## Patentansprüche

1. Einstellbare Vorrichtung zum Transport mittels Schwerkraft von pulverförmigem oder körnigem Material zwischen einem oberen Behälter (1), der mit mindestens einer Entleerungsöffnung (1') versehen ist, die nach unten mündet, und einem unteren Behälter (2), der mit mindestens einer Auffüllöffnung (2') versehen ist, die nach oben mündet, **dadurch gekennzeichnet, daß** die Vorrichtung ein Kanalisationselement (20, 20.2) aufweist, dessen oberes Teil (20a, 20a.2) die Entleerungsöffnung (1') des oberen Behälters umgibt, wobei das untere Teil (20c, 20c.2, 91) des Elements (20, 20.2) mit einer Platte (10) verbunden ist, die dicht bei der Auffüllöffnung (2') des unteren Behälters (2) befestigt ist, wobei die Platte (10) mit einer Passage (110) versehen ist, die sich oberhalb der Öffnung (2') des unteren Behälters (2) befindet, und daß das Element (20, 20.2) mindestens teilweise in Translationsbewegung betätigbar ist durch Translationsmittel, die es gestatten, die Passage (110) aufgrund von Verschließ- und Öffnungsmitteln (30, 930, 931), die mindestens teilweise mit dem Element (20, 20.2) verbunden sind, einstellbar zu verschließen oder zu öffnen, um den Ablauf des pulverförmigen oder körnigen Materials zu gestatten.

2. Einstellbare Vorrichtung zum Transport mit Schwerkraft von pulverförmigem oder körnigem Material gemäß Anspruch 1, **dadurch gekennzeichnet, daß** das untere Teil (20c) des Elements (20) in ein mit der Platte (10) verbundenes Kanalisationsstück (101) mündet, wobei das Kanalisationsstück (101) die Passage (110) umgibt.

3. Einstellbare Vorrichtung zum Transport mittels Schwerkraft von pulverförmigem oder körnigem Material gemäß Anspruch 1, **dadurch gekennzeichnet, daß** das untere Teil (20c.2) des Elements (20.2) flexibel und mit der Platte (10) verbunden ist, und daß das untere Teil (20c.2) des Elements (20.2) die Passage (110) umgibt.

4. Einstellbare Vorrichtung zum Transport mittels Schwerkraft von pulverförmigem oder körnigem Material gemäß Anspruch 2 oder 3, **dadurch gekennzeichnet, daß** die oberhalb der Öffnung (2') des unteren Behälters (2) sich befindende Passage (110) einen Durchmesser aufweist, der geringer ist als die Öffnung (2') des unteren Behälters (2).

5. Einstellbare Vorrichtung zum Transport mittels Schwerkraft von pulverförmigem oder körnigem Material gemäß einem der Ansprüche 1 bis 4, **dadurch gekennzeichnet, daß** die Schließ- und Öffnungsmittel (30) ein Obturateur ist.

6. Einstellbare Vorrichtung zum Transport mit Schwerkraft von pulverförmigem oder körnigem Material gemäß Anspruch 5, **dadurch gekennzeichnet, daß** der Obturateur (30) in Form einer kugelförmigen Kappe vorliegt.

7. Vorrichtung zum Transport mittels Schwerkraft von pulverförmigem oder körnigem Material gemäß Anspruch 5 oder 6, **dadurch gekennzeichnet, daß** der Obturateur (30) mit einer Obturateur-Stange (31) verbunden ist, nämlich über ein Ende (31b) der Obturateur-Stange (31), wobei die Obturateur-Stange (31) über ihr anderes Ende (31a) mit einem metallischen Strukturteil (32) verbunden ist, welches seinerseits mit inneren Wänden des Elements (20, 20.2) verbunden ist.

8. Vorrichtung zum Transport mittels Schwerkraft von pulverförmigem oder körnigem Material gemäß Anspruch 7, **dadurch gekennzeichnet, daß** eine Kuppel (80) die vertikale Symmetrieachse des Elements (20, 20.2) umgibt und einen Teil des metallischen Strukturteils (32) bedeckt.

9. Einstellbare Vorrichtung zum Transport mittels Schwerkraft von pulverförmigem oder körnigem Material gemäß einem der Ansprüche 1 bis 8, **dadurch gekennzeichnet, daß** das Element (20, 20.2) und die mit dem Element (20, 20.2) verbundenen Öffnungs- und Schließmittel (30) in Translationsbewegung versetzt werden mittels Translationsmitteln (51, 151, 251), die am Element außen, aber mit dem Element mittels Stützausbaumitteln (53, 53', 153, 153', 253, 253') verbunden angeordnet sind.

10. Einstellbare Vorrichtung zum Transport mittels Schwerkraft von pulverförmigem oder körnigem Material gemäß Anspruch 9, **dadurch gekennzeichnet, daß** die Translationsbewegungsmittel (51, 151, 251) mindestens ein Stellglied aufweisen.

11. Einstellbare Vorrichtung zum Transport mittels Schwerkraft von pulverförmigem oder körnigem Material gemäß Anspruch 10, **dadurch gekennzeichnet, daß** die Stützausbaumittel (53, 53', 153, 153', 253, 253') mindestens ein Rohr aufweist, dessen eines Ende (53a, 53'a, 153a, 153'a, 253a, 253'a) durch einen Träger (55, 155, 255) in Translationsbewegung versetzt wird, der an der Stange (56, 156, 256) von jedem Stellglied befestigt ist, und dessen anderes Ende (53b, 53'b, 153b, 153'b, 253b, 253'b) mit dem Element (20, 20.2) verbunden ist.

12. Einstellbare Vorrichtung zum Transport mittels Schwerkraft von pulverförmigem oder körnigem Material gemäß einem der Ansprüche 2 oder 4 bis 11, falls von Anspruch 2 abhängig, **dadurch gekennzeichnet, daß** das Element (20) durch elastische Mittel (61, 161, 261) abgestützt wird, die zwischen der Platte (10) und Verteilerarmen (62, 162, 262) angeordnet sind.

13. Einstellbare Vorrichtung zum Transport mittels Schwerkraft von pulverförmigem oder körnigem Material gemäß einem der Ansprüche 3 bis 11, falls abhängig vom Anspruch 3, **dadurch gekennzeichnet, daß** das Element (20.2) durch elastische Mittel (61, 161, 261) abgestützt wird, die zwischen der Platte (10) und einer Platte (210) angeordnet sind, die mit dem oberen Teil (20a.2) des Elements (20.2) verbunden ist.

14. Einstellbare Vorrichtung zum Transport mittels Schwerkraft von pulverförmigem oder körnigem Material gemäß Anspruch 12 oder 13, **dadurch gekennzeichnet, daß** das Element (20, 20.2) durch Schwingungsmittel (63, 163, 263) verbunden wird.

15. Vorrichtung zum Transport mittels Schwerkraft von pulverförmigem oder körnigem Material gemäß Anspruch 13, **dadurch gekennzeichnet, daß** die Schwingungsmittel (63, 163, 263) des Elements (20) mit den durch die elastischen Mittel (61, 161, 261) gestützten Armen (62, 162, 262) verbunden sind.

16. Vorrichtung zum Transport mittels Schwerkraft von pulverförmigem oder körnigem Material gemäß Anspruch 13, **dadurch gekennzeichnet, daß** die Schwingungsmittel (63, 163, 263) des Elements (20.2) mit der Platte (210) verbunden sind, die mit dem oberen Teil (20a.2) des Elements (20.2) verbunden ist.

17. Vorrichtung zum Transport mittels Schwerkraft von pulverförmigem oder körnigem Material gemäß Anspruch 11, **dadurch gekennzeichnet, daß** die Achse der ersten Stange (56) des ersten Stellglieds (51), die Achse der ersten Feder (61) und die Symmetrieachse des Elements (20, 20.2) parallel sind und in einer gleichen ersten Ebene verlaufen, wobei das erste Stellglied (51) und die erste Feder (61) zu beiden Seiten der Symmetrieachse des Elements (20, 20.2) angeordnet sind, und daß die Achse der zweiten Stange (156) des zweiten Stellglieds (151), die Achse der zweiten Feder (161) und die Symmetrieachse des Elements (20, 20.2) parallel sind und in einer gleichen zweiten Ebene verlaufen, wobei das zweite Stellglied (151) und die zweite Feder (161) zu beiden Seiten der Symmetrieachse des Elements (20, 20.2) angeordnet sind, und daß die Achse der dritten Stange (256) des dritten Stellglieds (251), die Achse der dritten Feder (261) und die Symmetrieachse des Elements (20, 20.2) parallel sind und in einer gleichen dritten Ebene verlaufen, wobei das dritte Stellglied (251) und die dritte Feder (261) zu beiden Seiten der Symmetrieachse des Elements (20, 20.2) angeordnet sind, und daß diese ersten, zweiten und dritten Ebenen jeweils zwei zueinander einen Winkel von 120° bilden.

18. Einstellbare Vorrichtung zum Transport mittels Schwerkraft von pulverförmigem oder körnigem Material gemäß einem der Ansprüche 1 bis 17, **dadurch gekennzeichnet, daß** sie Dichtungsmittel (41) aufweist, die zwischen dem Element (20, 20.2) und dem oberen Behälter (1) angeordnet sind.

19. Einstellbare Vorrichtung zum Transport mittels Schwerkraft von pulverförmigem oder körnigem Material gemäß einem der Ansprüche 2 oder 4 bis 18, falls von Anspruch 2 abhängig, **dadurch gekennzeichnet, daß** sie Dichtungsmittel (42) umfaßt, die zwischen dem Kanalisationsstück (101) der Platte (10) und dem Element (20) angeordnet sind.

20. Einstellbare Vorrichtung zum Transport mittels Schwerkraft von pulverförmigem oder körnigem Material gemäß Anspruch 1, **dadurch gekennzeichnet, daß** die Öffnungsmittel in Form zweier Teile (930, 931) vorliegen, wobei ein erstes Teil (930) mit dem unteren Teil (91) des Elements (20) verbunden ist, um in einer Position die Abdichtung des oberen Behälters sicherzustellen, und wobei das zweite Teil (931) auf einem Zwischenelement (92) montiert ist, um die Abdichtung des unteren Behälters sicherzustellen, wobei das Zwischenelement (92) zwischen dem unteren Teil des Elements (20) und der Platte (10) montiert ist.

21. Einstellbare Vorrichtung zum Transport mittels Schwerkraft von pulverförmigem oder körnigem Material gemäß Anspruch 20, **dadurch gekennzeichnet, daß** das Zwischenelement (92) aus flexiblem Material gefertigt ist.

22. Einstellbare Vorrichtung zum Transport mittels Schwerkraft von pulverförmigem oder körnigem Material gemäß Anspruch 20 oder 21, **dadurch gekennzeichnet, daß** das untere Ende (922) des Zwischenelements (92) mit der Platte (10) befestigt ist und das obere Ende (921) des Zwischenelements (92) mit einer Zwischenplatte befestigt ist, wobei die Zwischenplatte (94) in Bezug auf die vertikale Achse im Verhältnis zur Platte (10) translatorisch beweglich ist.

23. Einstellbare Vorrichtung zum Transport mittels Schwerkraft von pulverförmigem oder körnigem Material gemäß Anspruch 22, **dadurch gekennzeichnet, daß** das Zwischenelement (92) eine erste Umhüllung (922), die einerseits an der Platte (10) und andererseits an einem festen Ring (924) befestigt ist, und eine zweite Umhüllung (923), die einerseits an der Zwischenplatte (94) und andererseits an dem festen Ring (924) befestigt ist, aufweist, wobei der Ring (924) mit der Zwischenplatte (94) verbunden ist und in seiner Position im Verhältnis zur Platte festgelegt ist.

24. Einstellbare Vorrichtung zum Transport mittels Schwerkraft von pulverförmigem oder körnigem Material gemäß einem der Ansprüche 20 bis 23, **dadurch gekennzeichnet, daß** sie Reinigungsmittel für den Raum aufweisen, der durch die Flächen (933, 934) gegenüber den beiden, die Öffnungsmittel bildenden Teilen (930, 931) begrenzt wird, wobei diese Mittel eine staubfreie Verbindung gestatten.

25. Einstellbare Vorrichtung zum Transport mittels Schwerkraft von pulverförmigem oder körnigem Material gemäß Anspruch 24, **dadurch gekennzeichnet, daß** die Reinigungsmittel Mittel (960, 962) zum Injizieren von Luft, durch einen durch das untere Teil (931) der Öffnungsmittel laufenden Kanal (962), in den Raum aufweist, der durch die Flächen (933, 934) gegenüber den beiden, die Öffnungsmittel bildenden Teilen (930, 931) begrenzt wird.

26. Einstellbare Vorrichtung zum Transport mittels Schwerkraft von pulverförmigem oder körnigem Material gemäß Anspruch 24 oder 25, **dadurch gekennzeichnet, daß** die Reinigungsmittel Mittel (920) zum Ansaugen von Luft, die an der Zwischenplatte (94) montiert sind, aufweisen, um die Luft des Raums abzusaugen, der durch die Seiten (933, 934) gegenüber den beiden, die Öffnungsmittel bildenden Teilen (930, 931) begrenzt wird, wobei diese Mittel eine staubfreie Verbindung gestatten.

27. Einstellbare Vorrichtung zum Transport mittels Schwerkraft von pulverförmigem oder körnigem Material gemäß Anspruch 23, **dadurch gekennzeichnet, daß** sie eine Öffnungsposition aufweist, in der die Öffnungsmittel (930, 931) der zweiten Umhüllung (923) des Zwischenelements (92) gegenüberliegen, mit einem größeren Durchmesser als dem der Öffnungsmittel in mindestens einer Position, um den Ablauf um die Öffnungsmittel herum zu ermöglichen.

28. Einstellbare Vorrichtung zum Transport mittels Schwerkraft von pulverförmigem oder körnigem Material gemäß Anspruch 20, **dadurch gekennzeichnet, daß** sie eine Schließposition aufweist, in der die Öffnungsmittel (930, 931) zum Anschlag auf das untere Teil (91) des Elements (20) kommen und dieses deformieren.

29. Einstellbare Vorrichtung zum Transport mittels Schwerkraft von pulverförmigem oder körnigem Material gemäß Anspruch 26, **dadurch gekennzeichnet, daß** sie eine Reinigungsposition aufweist, in der die Öffnungselemente in Form von zwei Teilen (930, 931), einem oberen und einem unteren, getrennt sind, wobei das obere Teil (930) der Öffnungsmittel mit dem unteren Teil (91) des Elements (20) die Dichtheit des oberen Behälters sicherstellt und das untere Teil (931) der Öffnungsmittel mit der ersten Umhüllung (922) des Zwischenelements (92) die Dichtheit des unteren Behälters (2) sicherstellt.
